# EUROPÄISCHE PATENTSCHRIFT

(11) **EP 1 474 307 B1**
(45) Veröffentlichungstag und Bekanntmachung des Hinweises auf die Patenterteilung: **25.10.2006**
(21) Anmeldenummer: 03739453.3
(22) Anmeldetag: 04.02.2003
(51) Int. Cl.: B60N 2/08

(54) **LÄNGSEINSTELLER FÜR EINEN FAHRZEUGSITZ**
LONGITUDINAL ADJUSTER FOR A VEHICLE SEAT
SYSTEME DE REGLAGE LONGITUDINAL POUR SIEGE DE VEHICULE

(30) Priorität: 11.02.2002 DE 10206300
(43) Veröffentlichungstag der Anmeldung: 10.11.2004
(73) Patentinhaber: Keiper GmbH & Co., 67657 Kaiserslautern (DE)
(72) Erfinder: BORBE, Michael, 53359 Rheinbach (DE); VOSS, Heinz, 51375 Leverkusen (DE)
(74) Vertreter: Patentanwälte Hosenthien-Held und Dr. Held
(86) Internationale Anmeldenummer: PCT/EP2003/001062
(87) Internationale Veröffentlichungsnummer: WO 2003/068553

(56) Entgegenhaltungen:
- EP-A- 0 349 918
- EP-A- 0 842 808
- FR-A- 2 759 330
- US-A- 5 234 189

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Aus der EP 0 842 808 A1 ist bei einem Fahrzeugsitz ein Längseinsteller dieser Art bekannt, bei dem mehrere, gemeinsam manuell betätigbare Rastbügel mit je vier Zähnen auf jeder Längsseite schwenkbar an der zweiten Sitzschiene gelagert sind. Die mit den Zähnen zusammenwirkenden Rasten der ersten Sitzschiene weisen einen trichterförmigen, äußeren Einfallbereich, welcher das Einfallen von wenigstens einem Rastbügel sicherstellen soll, und einen inneren Einfallbereich mit parallelen Flanken auf, welcher die Verriegelung bewirken soll.

Die EP 0 349 918 A2 zeigt einen bekannten Längseinsteller der eingangs genannten Art, bei dem wenigstens ein Sperrelement mit einem reibungsarmen Gleitbelag aus Kunststoff versehen ist, um einen Abrieb zu verringern.

Der Erfindung liegt die Aufgabe zu Grunde, einen Längseinsteller der eingangs genannten Art weiter zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, dass wenigstens eine Randschicht des Sperrelementes weicher als ein die Öffnungen umgebender Randbereich der zweiten Sitzschiene und/oder weicher als ein die Rasten umgebender Randbereich der ersten Sitzschiene ausgebildet ist, wird ein Plastifizieren, d.h. ein plastisches Verformen der Randbereiche der Sitzschienen unter Last aufgrund der Härte des Sperrelementes verhindert. Dies ist insbesondere vorteilhaft, wenn die Randbereiche als Führungsflächen für das Sperrelement wirken, also beispielsweise trichterförmig zulaufen und/oder eine trapezförmige Öffnung begrenzen, so dass das Sperrelement in seiner verriegelnden Endstellung spielfrei ist. Eine Plastifizierung dieser Randbereiche würde eine Spielfreistellung verhindern.

Das Sperrelement ist so hergestellt worden, dass lediglich die Randschicht weich und der Kern hart ist, um die Belastungen besser aufnehmen zu können. Dies wird bevorzugt dadurch erreicht, dass die Randschicht des Sperrelementes einer Randentkohlung unterzogen wird, beispielsweise im Rahmen des Wärmebehandlungsprozesses, und zwar nach dem Härten. Dadurch bleiben die Kosten niedrig. Bei dieser Lösung besteht also die Randschicht ursprünglich aus dem gleichen Material wie der Kern und ist mit diesem einstückig ausgebildet, wobei nach dem Härten des gesamten Sperrelementes die Randschicht durch die Randentkohlung wieder weicher als der Kern wird.

Der erfindungsgemäße Längseinsteller ist für alle Arten von längseinstellbaren Sitzen verwendbar. Im Falle einer bevorzugten Ausbildung des Sperrelementes als starre Rastplatte mit seitlich abstehenden Zähnen weist wenigstens ein äußerer Zahn eine gegenüber den anderen Zähnen unterschiedliche Breite in Schienenlängsrichtung auf, um das spielfreie Einfallen in die Unterschiene zu verbessern. Es kann dabei ein Zahn oder zwei gegenüberliegende Zähne breiter ausgeführt sein.

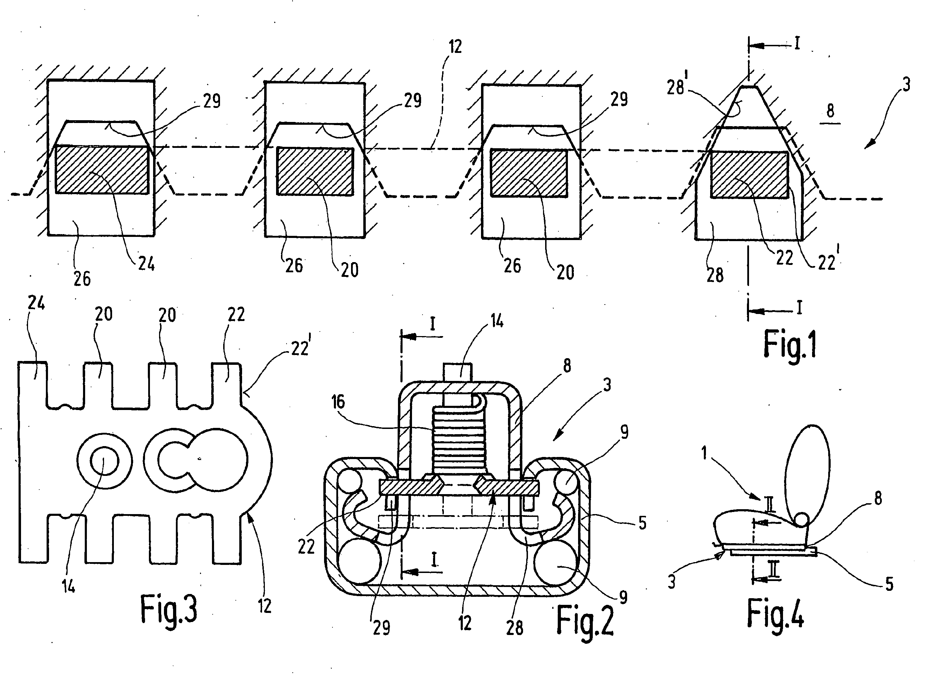

Im folgenden ist die Erfindung anhand eines in der Zeichnung dargestellten Ausfiihrungsbeispiels näher erläutert. Es zeigen
- Fig. 1: einen schematisierten, nur teilweise dargestellten Längsschnitt durch das Ausführungsbeispiel im Bereich einer Rastplatte entlang der Linie I-I in Fig. 2 im verriegelten Zustand,
- Fig. 2: einen Querschnitt durch das Ausführungsbeispiel entlang der Linie II-II in Fig. 1 und Fig. 4 im verriegelten Zustand, wobei der entriegelte Zustand gestrichelt angedeutet ist,
- Fig. 3: eine Draufsicht auf die Rastplatte, und
- Fig. 4: eine schematische Seitenansicht eines Fahrzeugsitzes.

Eine Vorrichtung zur Längseinstellung eines Fahrzeugsitzes 1 ist im folgenden als Längseinsteller 3 bezeichnet. Die gewöhnliche Orientierung des Fahrzeugsitzes 1 in einem Kraftfahrzeug und dessen normale Fahrtrichtung definieren die nachfolgenden Richtungsangaben. Der Längseinsteller 3 weist auf jeder Seite des Fahrzeugsitzes 1 als erste Sitzschiene eine fahrzeugstrukturfeste Unterschiene 5 und als zweite Sitzschiene eine sitzstrukturfeste Oberschiene 8 auf. Die näherungsweise U-förmig profilierte, nach oben geöffnete Unterschiene 5 und die ebenfalls näherungsweise U-förmig profilierte, nach unten geöffnete Oberschiene 8 umgreifen einander wechselseitig mit ihren nach innen bzw. nach außen gebogenen Ränder, wobei die Oberschiene 8 als Laufschiene unter Zwischenlage von Kugeln 9 in der Unterschiene 5 als Führungsschiene längsverschiebbar geführt ist.

Zur Verriegelung von Oberschiene 8 und Unterschiene 5 ist als Sperrelement wenigstens eine Rastplatte 12 vorgesehen, wobei auch mehrere in Längsrichtung hintereinander angeordnete Rastplatten 12 vorhanden sein können. Die Rastplatte 12 ist im wesentlichen horizontal innerhalb eines durch die Oberschiene 8 definierten Bauraums angeordnet. Mittels eines von der Rastplatte 12 nach oben abstehenden Führungsbolzens 14 ist die Rastplatte 12 in vertikaler Richtung relativ zur Oberschiene 8 beweglich geführt, wobei ein gewisses Spiel zwischen dem Führungsbolzen 14 und der Oberschiene 8 vorgesehen ist. Eine neben dem Führungsbolzen 14 angeordnete, vorgespannte Rückstellfeder 16 ist zwischen der Rastplatte 12 und der Oberschiene 8 eingehängt und sorgt für eine nach oben gerichtete Vorspannung der Rastplatte 12. Es können auch zwei Rückstellfedern 16 vorgesehen sein.

Die Rastplatte 12 weist an ihren beiden Längsseiten jeweils vier horizontale, quer zur Schienenlängsrichtung abstehende Zähne auf, wobei die in Schienenlängsrichtung inneren Zähne mit 20 und die in Schienenlängsrichtung äußeren Zähne mit 22 und 24 bezeichnet sind. Die einander gegenüberliegenden Zähne 20 und 22 sind jeweils als Paare bezeichnet. Die inneren Zähne 20 und ein erstes Paar von äußeren Zähnen 22 haben in Schienenlängsrichtung die gleiche Breite, während das zweite Paar von äußeren Zähnen 24 eine größere Breite aufweist. Die inneren Zähne 20 und das zweite Paar von äußeren Zähnen 24 greifen durch näherungsweise rechteckige, erste Öffnungen 26 in der Oberschiene 8. Das erste Paar von äußeren Zähnen 22 greift durch eine zweite Öffnung 28, welche in ihrem oberen Bereich trapezförmig und in dem daran anschließenden Bereich rechteckförmig ist.

Im verriegelten Zustand des Längseinstellers 3 greifen die Zähne 20, 22 und 24 in nach unten geöffnete Rasten 29 der Unterschiene 5. Die im wesentlichen über die gesamte Länge der Unterschiene 5 vorhandenen Rasten 29 sind zueinander gleich beabstandet und untereinander gleich ausgebildet. Der Übergang in den entriegelten Zustand erfolgt über eine nicht näher dargestellte Aushebemechanik, welche den Führungsbolzen 14 nach unten drückt. Beim Übergang vom entriegelten Zustand in den verriegelten Zustand, welcher durch die Kraft der Rückstellfeder 16 erfolgt, dient der Randbereich 28' der Oberschiene 8, welcher diese zweite Öffnung 28 im trapezförmigen Bereich begrenzt, als Führungsfläche für die Bewegung der Rastplatte 12. Die Form dieses Randbereichs 28' und die größere Breite des zweiten Paares von äußeren Zähnen 24 sorgen für ein spielfreies Verriegeln der Rastplatte 12, wobei das erste Paar von äußeren Zähnen 22 die Spielfreiheit gegenüber der Oberschiene 8 und das zweite Paar von äußeren Zähnen 24 die Spielfreiheit gegenüber der Unterschiene 5 herstellt.

Damit die äußeren Zähne 22 sich nicht versehentlich in den Randbereich 28' eingraben, was ein weiteres Spielfreistellen verhindern würde, ist die Randschicht 22' zumindest der äußeren Zähne 22 weicher ausgebildet als der Randbereich 28'. In bevorzugter erfindungsgemäßer Ausbildung erfolgt dies dadurch, daß die Rastplatte 12 aus einem randentkohlten Vergütungsstahl hergestellt wird. Der Prozeß der Randentkohlung wird nach dem Härten durchgeführt, so daß ein harter Kern, welcher die erforderlichen statischen und dynamischen Lasten aufnehmen kann, und eine mit dem Kern einstückig ausgebildete, weiche, definierte, genügend tiefe Randschicht 22' entsteht, die aufgrund der Kontaktbedingungen zwischen Rastplatte 12 und Randbereich 28' unter Last plastifizieren kann, ohne daß der Randbereich 28' sich plastisch verformt. Damit erfolgt das Verriegeln auch nach einer Plastifizierung spielfrei. Durch die Integration der Randentkohlung in den Wärmebehandlungsprozeß entstehen keine oder - im Vergleich zu einer Sandwichbauweise - nur geringfügige Mehrkosten.

### Bezugszeichenliste

- 1: Fahrzeugsitz
- 3: Längseinsteller
- 5: Unterschiene, erste Sitzschiene
- 8: Oberschiene, zweite Sitzschiene
- 9: Kugel
- 12: Rastplatte, Sperrelement
- 14: Führungsbolzen
- 16: Rückstellfeder
- 20: innerer Zahn
- 22: äußerer Zahn eines ersten Paares
- 22': Randschicht
- 24: äußerer Zahn eines zweiten Paares
- 26: erste Öffnung
- 28: zweite Öffnung
- 28': Randbereich
- 29: Raste

## Patentansprüche

1. Längseinsteller für einen Fahrzeugsitz, insbesondere für einen Kraftfahrzeugsitz, mit einer ersten Sitzschiene (5), einer relativ zur ersten Sitzschiene (5) in Längsrichtung verschiebbaren zweiten Sitzschiene (8) und wenigstens einem Sperrelement (12), welches beweglich in der zweiten Sitzschiene (8) gelagert ist, wenigstens bereichsweise durch Öffnungen (26, 28) der zweiten Sitzschiene (8) nach außen greift und zum Verriegeln des Längseinstellers (3) mit Rasten (29) der ersten Sitzschiene (5) zusammenwirkt, **dadurch gekennzeichnet, dass** das Sperrelement (12) einen Kern und wenigstens eine einstückig mit diesem aus ursprünglich dem gleichen Material ausgebildeten Randschicht (22') aufweist, welche weicher als der Kern des Sperrelementes (12) und weicher als ein die Öffnungen (26, 28) umgebender Randbereich (28') der zweiten Sitzschiene (8) und/oder weicher als ein die Rasten (29) umgebender Randbereich der ersten Sitzschiene (5) ausgebildet ist.

2. Längseinsteller nach Anspruch 1, **dadurch gekennzeichnet, dass** die Randschicht (22') des Sperrelementes (12) einen gegenüber dem Kern des Sperrelementes (12) geringeren Kohlenstoffgehalt aufweist.

3. Längseinsteller nach Anspruch 1 oder 2, **dadurch gekennzeichnet, dass** das Sperrelement (12) als Rastplatte ausgebildet ist, die zum Zusammenwirken mit den Rasten (29) der ersten Sitzschiene (5) Paare von Zähnen (20, 22) aufweist, welche durch die Öffnungen (26, 28) der zweiten Sitzschiene (8) greifen.

4. Längseinsteller nach Anspruch 3, **dadurch gekennzeichnet, dass** wenigstens ein in Schienenlängsrichtung äußerer Zahn (24) eine von den inneren Zähnen (20) abweichende Breite in Schienenlängsrichtung aufweist.

5. Längseinsteller nach Anspruch 4, **dadurch gekennzeichnet, dass** ein Paar gegenüberliegender äußerer Zähne (24) eine gegenüber den inneren Zähnen (20) größere Breite in Schienenlängsrichtung aufweisen.

6. Längseinsteller nach einem der Ansprüche 1 bis 5, **dadurch gekennzeichnet, dass** der Randbereich (28') wenigstens einer (28) der vorhandenen Öffnungen (26, 28) der zweiten Sitzschiene (8) als Führungsfläche für das Sperrelement (12) ausgebildet ist.

7. Längseinsteller nach Anspruch 6, **dadurch gekennzeichnet, dass** die von dem als Führungsfläche dienenden Randbereich (28) begrenzte Öffnung (28) wenigstens teilweise einen trapezförmigen Querschnitt aufweist.

8. Fahrzeugsitz, insbesondere Kraftfahrzeugsitz, mit einem Längseinsteller (3) nach einem der Ansprüche 1 bis 7.

## Claims

1. Longitudinal adjuster for a vehicle seat, in particular for a motor vehicle seat, having a first seat rail (5), a second seat rail (8) which can be displaced in a longitudinal direction relative to the first seat rail (5), and at least one locking element (12) which is supported movably in the second seat rail (8), which extends outwards at least in regions through openings (26, 28) of the second seat rail (8) and which co-operates with indentations (29) of the first seat rail (5) in order to lock the longitudinal adjuster (3), **characterised in that** the locking element (12) has a core and at least one peripheral layer (22') which is constructed integrally therewith from the same material originally and which is constructed so as to be softer than the core of the locking element (12) and softer than a peripheral region (28') of the second seat rail (8) surrounding the openings (26, 28) and/or softer than a peripheral region of the first seat rail (5) surrounding the indentations (29).

2. Longitudinal adjuster according to claim 1, **characterised in that** the peripheral layer (22') of the locking element (12) has a carbon content which is lower with respect to the core of the locking element (12).

3. Longitudinal adjuster according to claim 1 or 2, **characterised in that** the locking element (12) is in the form of an indented plate which has pairs of teeth (20, 22), which engage through the openings (26, 28) of the second seat rail (8), in order to co-operate with the indentations (29) of the first seat rail (5).

4. Longitudinal adjuster according to claim 3, **characterised in that** at least one outer tooth (24) in the longitudinal direction of the rails has a width which is different from the inner teeth (20) in the longitudinal direction of the rails.

5. Longitudinal adjuster according to claim 4, **characterised in that** a pair of opposing outer teeth (24) have a greater width than the inner teeth (20) in the longitudinal direction of the rails.

6. Longitudinal adjuster according to any one of claims 1 to 5, **characterised in that** the peripheral region (28') of at least one (28) of the openings (26, 28) provided in the second seat rail (8) is in the form of a guide face for the locking element (12).

7. Longitudinal adjuster according to claim 6, **characterised in that** the opening (28) which is delimited by the peripheral region (28) which acts as a guide face at least partially has a trapezoidal cross-section.

8. Vehicle seat, in particular motor vehicle seat, having a longitudinal adjuster (3) according to any one of claims 1 to 7.

## Revendications

1. Dispositif de réglage en longueur pour un siège de véhicule, en particulier pour un siège de véhicule automobile, comportant un premier rail de siège (5), un deuxième rail de siège (8) déplaçable dans la direction de la longueur relativement au premier rail de siège (5) et au moins un élément de blocage (12), lequel est monté mobile dans le deuxième rail de siège (8), s'étend vers l'extérieur au moins par zones à travers des ouvertures (26, 28) du deuxième rail de siège (8), et coopère pour le verrouillage du dispositif de réglage en longueur (3) avec des encoches (29) du premier rail de siège (5), **caractérisé par le fait que** l'élément de blocage (12) présente un noyau et au moins une couche de bordure (22') réalisée d'une seule pièce avec celui-ci à partir d'initialement le même matériau, laquelle est réalisée plus souple que le noyau de l'élément de blocage (12) et plus souple qu'une zone de bordure (28') entourant les ouvertures (26, 28) du deuxième rail de siège (8) et/ou plus souple qu'une zone de bordure entourant les encoches (29) du premier rail de siège (5).

2. Dispositif de réglage en longueur selon la revendication 1, **caractérisé par le fait que** la couche de bordure (22') de l'élément de blocage (12) présente une teneur en carbone plus faible en regard du noyau de l'élément de blocage (12).

3. Dispositif de réglage en longueur selon l'une des revendications 1 ou 2, **caractérisé par le fait que** l'élément de blocage (12) est réalisé sous la forme d'une plaque à encoches, qui présente, pour la coopération avec les encoches (29) du premier rail de siège (5) des paires de dents (20, 22), lesquelles s'étendent à travers les ouvertures (26, 28) du deuxième rail de siège (8).

4. Dispositif de réglage en longueur selon la revendication 3, **caractérisé par le fait qu'**au moins une dent (24) extérieure dans la direction de la longueur du rail présente une largeur s'écartant des dents internes (20) dans la direction de la longueur du rail.

5. Dispositif de réglage en longueur selon la revendication 4, **caractérisé par le fait qu'**une paire de dents externes (24) se faisant face présente une largeur supérieure en regard des dents internes (20) dans la direction de la longueur du rail.

6. Dispositif de réglage en longueur selon l'une quelconque des revendications 1 à 5, **caractérisé par le fait que** la zone de bordure (28') d'au moins l'une (28) des ouvertures présentes (26, 28) du deuxième rail de siège (8) est réalisée sous la forme d'une surface de guidage pour l'élément de blocage (12).

7. Dispositif de réglage en longueur selon la revendication 6, **caractérisé par le fait que** l'ouverture (28) limitée par la zone de bordure (28) servant de surface de guidage présente au moins en partie une section en forme de trapèze.

8. Siège de véhicule, en particulier siège de véhicule automobile, présentant un dispositif de réglage en longueur (3) tel que défini à l'une des revendications 1 à 7.
